# EUROPEAN PATENT APPLICATION

(11) **EP 2 887 523 A1**
(43) Date of publication of application: **24.06.2015**
(21) Application number: 14198935.0
(22) Date of filing: 18.12.2014
(51) Int. Cl.: H02M 3/335, H02M 3/338, H02M 1/00, H02M 7/48

(54) **Resonant bidirectional converter, uninterruptible power supply apparatus, and control method**

(30) Priority: 20.12.2013 CN 201310714681
(71) Applicant: Huawei Technologies Co., Ltd., Longgang District Shenzhen, Guangdong 518129 (CN)
(72) Inventor: Huang, Boning, 518129 Shenzhen Guangdong (CN); Liang, Yongtao, 518129 Shenzhen Guangdong (CN); Chen, Wenbin, 518129 Shenzhen Guangdong (CN); Pan, Denghai, 518129 Shenzhen Guangdong (CN)
(74) Representative: Maiwald Patentanwalts GmbH

(57) **Abstract**

The present invention provides a resonant bidirectional converter, an uninterruptible power supply apparatus, and a control method. The resonant bidirectional converter includes: a filter capacitor, three primary side bridge arms, a resonant cavity, three transformers, and three secondary side bridge arms, where two ends of each of the primary side bridge arms are separately connected to two ends of a bus capacitor, each of the primary side bridge arms includes two semiconductor switch that are serially connected in a same direction, and any connection point located between the two semiconductor switch of the primary side bridge arm that are serially connected in the same direction is a first connection point. By using a resonant cavity of a three-phase interleaved parallel resonant technology, an inherent defect of a large ripple current of a resonant converter is overcome, and a ripple current of a low-voltage-side capacitor (that is, a filter capacitor) is effectively reduced, thereby further reducing a size of the filter capacitor, improving power density of a power source, and decreasing a cost of the filter capacitor.

## Description

### TECHNICAL FIELD

The present invention relates to power supply technologies, and in particular, to a resonant bidirectional converter, an uninterruptible power supply apparatus, and a control method.

### BACKGROUND

A typical uninterruptible power supply (Uninterruptible Power Supply, UPS) system includes an input end converter and an output end converter, where the input end converter converts an alternating current (Alternating Current, AC) or direct current (Direct Current, DC) voltage, which is input by the mains or a renewable energy source (such as a solar panel), into a stable and controllable voltage of a direct current bus, that is, a voltage at two ends of a high-voltage capacitor of the UPS, and then the output end converter converts the direct current bus voltage into a controllable DC or AC voltage, and provides the controllable DC or AC voltage to a critical load. The direct current bus (that is, an energy storage container whose entity is a high-voltage capacitor) has one end connected to the input end converter of the UPS, and the other end connected to the output end converter.

To improve the reliability of power supply, a high-voltage battery is connected in parallel to the direct current bus, and if the input end converter is powered down, the high-voltage battery connected in parallel to the direct current bus continues to supply power to the output end converter, thereby ensuring uninterruptible power supply of the critical load.

When a voltage of the battery is different from the voltage of the direct current bus, a converter needs to be added between the battery voltage and the direct current bus voltage. For example, in some application scenarios with a low battery voltage in the communications field and the like, a voltage of a direct current bus is high, for example, hundreds of volts, but a voltage of a battery in a communications equipment room is generally 48 V, and therefore, a bidirectional converter needs to be added between the battery and the bus. When the mains power is interrupted, the bidirectional converter increases the voltage of the 48 V battery to a high direct current voltage (for example, 400 V) required by the direct current bus of the UPS, to continue to ensure uninterruptible power supply to a key load. When the mains input is normal, the bidirectional converter decreases the mains voltage to charge the battery, and supplies power to the key load through an output end converter at the same time.

At present, a single-phase series resonant converter is a commonly used and highly efficient bidirectional converter. The bidirectional converter is based on a principle of a series resonant converter, and therefore has a defect of a large ripple current of a capacitor at a battery side. To eliminate the ripple current of the capacitor at the battery side, no matter for voltage increase from the voltage of the capacitor at the battery side to a voltage of a capacitor at a direct current bus side, or for voltage decrease from the voltage of the capacitor at the direct current bus side to the voltage of the capacitor at the battery side, the two capacitors both need to be connected in parallel to a large-capacity capacitor, which enlarges a size of a filter. Especially in medium or high power level applications, because a ripple current problem at a low voltage side becomes more obvious, a larger-capacity capacitor needs to be connected in parallel, causing that the size of the filter is too large to benefit high-density design of a power source.

### SUMMARY

In view of this, embodiments of the present invention provide a resonant bidirectional converter, an uninterruptible power supply apparatus, and a control method, so as to reduce a ripple current of a low-voltage-side capacitor.

A first aspect of the present invention provides a resonant bidirectional converter, including: a filter capacitor, three primary side bridge arms, a resonant cavity, three transformers, three secondary side bridge arms, where
two ends of each primary side bridge arm are separately connected to two ends of a bus capacitor, each primary side bridge arm includes two semiconductor switch that are serially connected in a same direction, and any connection point located between the two semiconductor switch that are serially connected in the same direction of each primary side bridge arm is a first connection point;
the resonant cavity includes three inductor-capacitor circuits, one end of each of the three inductor-capacitor circuits is connected to the first connection point of each of the three primary side bridge arms on a one-to-one basis, and the other end of each of the three inductor-capacitor circuits is connected to a primary side of each of the three transformers on a one-to-one basis;
two ends of each secondary side bridge arm are separately connected to two ends of the filter capacitor, each secondary side bridge arm includes two semiconductor switch that are serially connected in a same direction, and any connection point located between the two semiconductor switch that are serially connected in the same direction of each secondary side bridge arm is a second connection point; and
secondary sides of the three transformers are connected to the second connection points of the three secondary side bridge arms on a one-to-one basis, primary side winding dotted terminals of the transformers are in star connection and floating, and secondary side winding dotted terminals of the transformers are in star connection and floating.

In the resonant bidirectional converter according to an embodiment of the present invention, by using a resonant cavity of a three-phase interleaved parallel resonant technology, an inherent defect of a large ripple current of a resonant converter is overcome, and a ripple current of a low-voltage-side capacitor (that is, a filter capacitor) is effectively reduced, thereby further reducing a size of the filter capacitor and improving power density of a power source.

With reference to the first aspect, in a first possible implementation manner, the semiconductor switch is one of the following:
a metal oxide semiconductor field-effect transistor, a bidirectional controllable metal oxide semiconductor field-effect transistor, an insulated gate bipolar transistor, a gate turn-off thyristor, and a diode.

With reference to the first possible implementation manner of the first aspect, in a second possible implementation manner, the two semiconductor switch of each of the primary side bridge arms are serially connected in the same direction in the following connection manner:
if the two semiconductor switch are metal oxide semiconductor field-effect transistors MOSFET, a source of one metal oxide semiconductor field-effect transistor MOSFET is connected to a drain of the other metal oxide semiconductor field-effect transistor MOSFET; or
if the two semiconductor switch are insulated gate bipolar transistors IGBT transistors, an emitter of one insulated gate bipolar transistor IGBT transistor is connected to a collector of the other insulated gate bipolar transistor IGBT transistor.

With reference to the first possible implementation manner of the first aspect, in a third possible implementation manner, the two semiconductor switch of each of the secondary side bridge arms are serially connected in the same direction in the following connection manner:
if the two semiconductor switch are MOSFET, a source of one MOSFET is connected to a drain of the other MOSFET; or
if the two semiconductor switch are IGBT transistors, an emitter of one IGBT transistor is connected to a collector of the other IGBT transistor.

With reference to the first aspect or any one of the possible implementation manners of the first aspect, in a fourth possible implementation manner, the converter further includes: three inductor components, where the three inductor components are separately connected in parallel to high-voltage-side coils of the three transformers, to generate constant-value excitation inductance of the three transformers separately.

With reference to the first aspect or any one of the possible implementation manners of the first aspect, in a fifth possible implementation manner, the three transformers include: a first sub magnetic core and a second sub magnetic core, where
the first sub magnetic core has three central pillars, the second sub magnetic core has three central pillars, and top ends of the three central pillars of the first sub magnetic core are disposed opposite to top ends of the three central pillars of the second sub magnetic core in a one-to-one correspondence manner, to form three groups, where each group includes one central pillar of the first sub magnetic core and one central pillar of the second sub magnetic core, of which top ends are disposed opposite to each other; and
an air gap exists between one central pillar of the first sub magnetic core and one central pillar of the second sub magnetic core in each group, of which top ends are disposed opposite to each other, to generate constant-value excitation inductance of the three transformers separately.

With reference to the first aspect or any one of the possible implementation manners of the first aspect, in a sixth possible implementation manner, the three inductor-capacitor circuits include a first inductor-capacitor circuit, a second inductor-capacitor circuit, and a third inductor-capacitor circuit, where the first inductor-capacitor circuit includes a first capacitor component and a first inductor component, the second inductor-capacitor circuit includes a second capacitor component and a second inductor component, and the third inductor-capacitor circuit includes a third capacitor component and a third inductor component;
the first inductor component, the second inductor component, and the third inductor component are integrated, and the integrated first inductor component, second inductor component, and third inductor component include: a third sub magnetic core, a fourth sub magnetic core, and a fifth sub magnetic core;
the third sub magnetic core has one central pillar, the fourth sub magnetic core has one central pillar, the fifth sub magnetic core has one central pillar, a top end of the central pillar of the third sub magnetic core faces an upper cover, and an air gap exists between the top end of the central pillar of the third sub magnetic core and the upper cover, to generate an inductance value of the first inductor component;
a top end of the central pillar of the fourth sub magnetic core faces a bottom surface of the third sub magnetic core, and an air gap exists between the top end of the central pillar of the fourth sub magnetic core and the bottom surface of the third sub magnetic core, to generate an inductance value of the second inductor component; and
a top end of the central pillar of the fifth sub magnetic core faces a bottom surface of the fourth sub magnetic core, and an air gap exists between the top end of the central pillar of the fifth sub magnetic core and the bottom surface of the fourth sub magnetic core, to generate an inductance value of the third inductor component.

With reference to the sixth possible implementation manner of the first aspect, in a seventh possible implementation manner, the first inductor component, the second inductor component, and the third inductor component are separately connected to the three transformers on a one-to-one basis, and the first capacitor component, the second capacitor component, and the third capacitor component are separately connected to the first connection points of the three primary side bridge arms on a one-to-one basis, where
one end of each of the first inductor component, the second inductor component, and the third inductor component is connected to the primary side of each of the three transformers on a one-to-one basis;
the other end of each of the first inductor component, the second inductor component, and the third inductor component is connected to one end of each of the first capacitor component, the second capacitor component, and the third capacitor component on a one-to-one basis; and
the other end of each of the first capacitor component, the second capacitor component, and the third capacitor component is connected to the first connection point of each of the three primary side bridge arms on a one-to-one basis.

With reference to the sixth possible implementation manner of the first aspect, in an eighth possible implementation manner, the first capacitor, the second capacitor, and the third capacitor are connected in a head-to-tail manner, any connection point between the first capacitor and the second capacitor, any connection point between the first capacitor and the third capacitor, and any connection point between the second capacitor and the third capacitor are separately connected to the primary sides of the three transformers on a one-to-one basis, the first inductor component, the second inductor component, and the third inductor component are separately connected to the three transformers on a one-to-one basis, and the first inductor component, the second inductor component, and the third inductor component are separately connected to the first connection points of the three primary side bridge arms on a one-to-one basis, where
one end of each of the first inductor component, the second inductor component, and the third inductor component is connected to the primary side of each of the three transformers on a one-to-one basis; and
the other end of each of the first inductor component, the second inductor component, and the third inductor component is connected to the first connection point of each of the three primary side bridge arms on a one-to-one basis.

In the resonant bidirectional converter according to the embodiment of the present invention, by using a resonant cavity of a three-phase interleaved parallel resonant technology, an inherent defect of a large ripple current of a resonant converter is overcome, and a ripple current of a low-voltage-side capacitor (that is, a filter capacitor) is effectively reduced, thereby further reducing a size of the filter capacitor and improving power density of a power source.

An embodiment of a second aspect of the present invention provides an uninterruptible power supply apparatus, including a bus capacitor, a battery, and the resonant bidirectional converter according to any one of the embodiments of the first aspect, where two ends of each primary side bridge arm of the resonant bidirectional converter are separately connected to two ends of the bus capacitor; two ends of each secondary side bridge arm of the resonant bidirectional converter are separately connected to two ends of the battery; and the resonant bidirectional converter is configured to decrease a voltage at the two ends of the bus capacitor to a voltage at the two ends of the battery, or increase a voltage at the two ends of the battery to a voltage at the two ends of the bus capacitor.

In a possible implementation manner of the embodiment of the second aspect of the present invention, the power supply apparatus further includes: a controller, where the controller is configured to control turn-on and turn-off of the semiconductor switch in the three primary side bridge arms, where in each of the primary side bridge arms, time sequence phases of switches of a semiconductor switch connected to a positive electrode of the bus capacitor and a semiconductor switch connected to a negative electrode of the bus capacitor differ by 180°, and in the three primary side bridge arms, the time sequence phases of the switches of the semiconductor switch connected to the positive electrode of the bus capacitor differ by 120° sequentially; and
semiconductor switch in the three secondary side bridge arms and connected to a positive electrode of the filter capacitor are in one-to-one correspondence to the semiconductor switch in the three primary side bridge arms and connected to the positive electrode of the bus capacitor, semiconductor switch in the three secondary side bridge arms and connected to a negative electrode of the filter capacitor are in one-to-one correspondence to the semiconductor switch in the three primary side bridge arms and connected to the negative electrode of the bus capacitor, and the controller is further configured to control the semiconductor switch in each of the secondary side bridge arms and connected to the positive electrode of the filter capacitor and a corresponding semiconductor switch in the primary side bridge arms and connected to the positive electrode of the bus capacitor to be in a synchronous rectification state; and control the semiconductor switch in each of the secondary side bridge arms and connected to the negative electrode of the filter capacitor and a corresponding semiconductor switch in the primary side bridge arms and connected to the negative electrode of the bus capacitor to be in a synchronous rectification state.

In the power supply apparatus according to the embodiment of the present invention, by using a resonant cavity of a three-phase interleaved parallel resonant technology, an inherent defect of a large ripple current of a resonant converter is overcome, and a ripple current of a low-voltage-side capacitor (that is, a filter capacitor) is effectively reduced, thereby further reducing a size of the filter capacitor and improving power density of a power source.

An embodiment of a third aspect of the present invention provides a control method, including:
controlling turn-on and turn-off of the semiconductor switch in three primary side bridge arms, where in each of the primary side bridge arms, time sequence phases of switches of a semiconductor switch connected to a positive electrode of the bus capacitor and a semiconductor switch connected to a negative electrode of the bus capacitor differ by 180°, and in the three primary side bridge arms, the time sequence phases of the switches of the semiconductor switch connected to the positive electrode of the bus capacitor differ by 120° sequentially; and
enabling semiconductor switch in the three secondary side bridge arms and connected to a positive electrode of the filter capacitor to be in one-to-one correspondence to the semiconductor switch in the three primary side bridge arms and connected to the positive electrode of the bus capacitor, enabling semiconductor switch in the three secondary side bridge arms and connected to a negative electrode of the filter capacitor to be in one-to-one correspondence to the semiconductor switch in the three primary side bridge arms and connected to the negative electrode of the bus capacitor, controlling the semiconductor switch in each of the secondary side bridge arms and connected to the positive electrode of the filter capacitor and a corresponding semiconductor switch in the primary side bridge arms and connected to the positive electrode of the bus capacitor to be in a synchronous rectification state, and controlling the semiconductor switch in each of the secondary side bridge arms and connected to the negative electrode of the filter capacitor and a corresponding semiconductor switch in the primary side bridge arms and connected to the negative electrode of the bus capacitor to be in a synchronous rectification state.

In the control method provided in the foregoing embodiment, by using a resonant cavity of a three-phase interleaved parallel resonant technology, an inherent defect of a large ripple current of a resonant converter is overcome, and a ripple current of a low-voltage-side capacitor (that is, a filter capacitor) is effectively reduced, thereby further reducing a size of the filter capacitor and improving power density of a power source.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic structural diagram of a resonant bidirectional converter according to an embodiment of the present invention;
FIG. 2 is a circuit diagram of a resonant bidirectional converter according to another embodiment of the present invention;
FIG. 3 is a simulated waveform diagram of a primary side bridge arm, a filter capacitor, and a transformer secondary side during a voltage decrease performed by a resonant bidirectional converter according to an embodiment of the present invention;
FIG. 4 is a circuit diagram of a resonant bidirectional converter according to another embodiment of the present invention;
FIG. 5 is a schematic diagram of an integrated structure of transformer magnetism in a resonant bidirectional converter according to an embodiment of the present invention;
FIG. 6 is a schematic diagram of an integrated structure of resonant inductors in a resonant bidirectional converter according to an embodiment of the present invention;
FIG. 7 is a circuit diagram of a resonant bidirectional converter according to another embodiment of the present invention;
FIG. 8 is a circuit diagram of a resonant bidirectional converter according to another embodiment of the present invention;
FIG. 9 is a circuit diagram of a resonant bidirectional converter according to another embodiment of the present invention;
FIG. 10 is a time sequence diagram of a drive signal of a semiconductor switch in a bridge arm in a resonant bidirectional converter according to an embodiment of the present invention;
FIG. 11 is a schematic structural diagram of an uninterruptible power supply apparatus according to another embodiment of the present invention;
FIG. 12 is a schematic structural diagram of an uninterruptible power supply apparatus according to another embodiment of the present invention; and
FIG. 13 is a schematic flowchart of a control method according to another embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

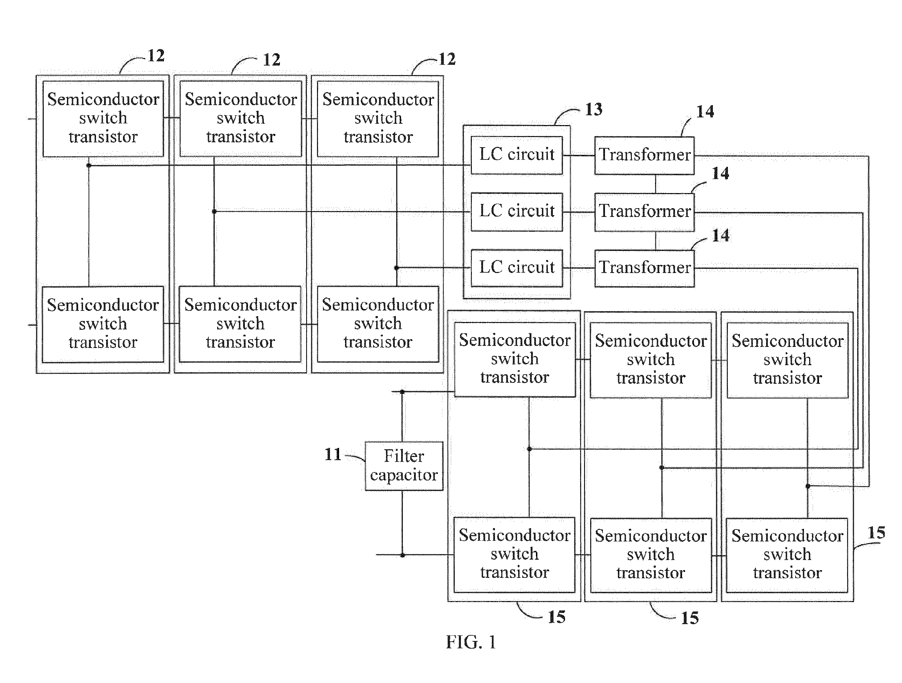

FIG. 1 is a schematic structural diagram of a resonant bidirectional converter according to an embodiment of the present invention. The resonant bidirectional converter provided in this embodiment includes: a filter capacitor 11, primary side bridge arms 12, a resonant cavity 13, transformers 14, and secondary side bridge arms 15.

Two ends of each primary side bridge arm 12 are separately connected to two ends of a bus capacitor, each primary side bridge arm 12 includes two semiconductor switch that are serially connected in a same direction, and any connection point located between the two semiconductor switch that are serially connected in the same direction of each primary side bridge arm 12 is a first connection point.

The resonant cavity 13 includes three inductor-capacitor circuits, one end of each of the three inductor-capacitor circuits is connected to the first connection point of each of the three primary side bridge arms 12 on a one-to-one basis, and the other end of each of the three inductor-capacitor circuits is connected to a primary side of each of the three transformers 14 on a one-to-one basis.

Two ends of each secondary side bridge arm 15 are separately connected to two ends of the filter capacitor 11, each secondary side bridge arm 15 includes two semiconductor switch that are serially connected in a same direction, and any connection point located between the two semiconductor switch that are serially connected in the same direction of each secondary side bridge arm 15 is a second connection point.

Secondary sides of the three transformers 14 are connected to the second connection points of the three secondary side bridge arms 15 on a one-to-one basis, primary side winding dotted terminals of the transformers 14 are in star connection and floating, and secondary side winding dotted terminals of the transformers 14 are in star connection and floating.

When the resonant bidirectional converter decreases a voltage at the two ends of the bus capacitor to a voltage at the two ends of the filter capacitor 11, the primary side bridge arms 12 are in a main switch state, time sequence phases of switches of the three primary side bridge arms 12 differ by 120° sequentially, and in each of the primary side bridge arms 12, phases of the two semiconductor switch differ by 180° and a duty cycle of each semiconductor switch is less than 50%. When the resonant bidirectional converter increases the voltage at the two ends of the filter capacitor 11 to the voltage at the two ends of the bus capacitor, the primary side bridge arms 12 are in a synchronous rectification state. The primary side bridge arm 12 being in a main switch state means that two semiconductor switch in the primary side bridge arm 12 are both in a main switch state. The primary side bridge arm 12 being in a synchronous rectification state means that two semiconductor switch in the primary side bridge arm 12 are both in a synchronous rectification state.

There are three transformers 14. Primary sides of the three transformers 14 are separately connected to the three LC circuits, and secondary sides of the three transformers 14 are separately connected to middle points of the secondary side bridge arms 15. Primary side winding dotted terminals and secondary side winding dotted terminals of the three transformers are separately in star (Y-shaped) connection. A middle point of a secondary side bridge arm 15 means a position on a connection line between two semiconductor switch in the secondary side bridge arm 15.

When the resonant bidirectional converter increases the voltage at the two ends of the filter capacitor 11 to the voltage at the two ends of the bus capacitor, the secondary side bridge arms 15 are in a main switch state, time sequence phases of switches of the three secondary side bridge arms 15 differ by 120° sequentially, and in each of the secondary side bridge arms 15, phases of the two semiconductor switch differ by 180° and a duty cycle of each semiconductor switch is less than 50%. When the resonant bidirectional converter decreases the voltage at the two ends of the bus capacitor to the voltage at the two ends of the filter capacitor 11, the secondary side bridge arms 15 are in a synchronous rectification state. The secondary side bridge arm 15 being in a main switch state means that two semiconductor switch in the secondary side bridge arm 15 are both in a main switch state. The secondary side bridge arm 15 being in a synchronous rectification state means that two semiconductor switch in the secondary side bridge arm 15 are both in a synchronous rectification state.

In this embodiment, by using a resonant cavity of a three-phase interleaved parallel resonant technology, an inherent defect of a large ripple current of a resonant converter is overcome, and a ripple current of a low-voltage-side capacitor (that is, a filter capacitor) is effectively reduced, thereby further reducing a size of the filter capacitor, improving power density of a power source, and decreasing a cost of the filter capacitor.

Preferably, the semiconductor switch in FIG. 1 is one of the following:
a metal oxide semiconductor field-effect transistor, a bidirectional controllable metal oxide semiconductor field-effect transistor, an insulated gate bipolar transistor, a gate turn-off thyristor, and a diode.

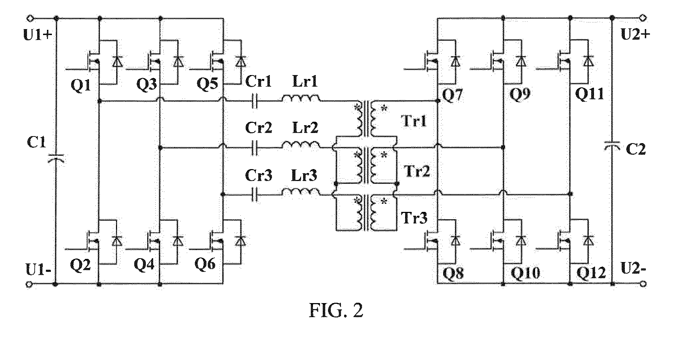

Further, FIG. 2 is a circuit diagram of a resonant bidirectional converter according to another embodiment of the present invention. In this embodiment, three primary side winding dotted terminals and three secondary side winding dotted terminals of transformers are separately in Y-shaped connection. An inductor of an LC circuit is connected to a primary side of a transformer, and a capacitor of the LC circuit is connected to a middle point of a primary side bridge arm. In addition, it should be noted that, three primary side bridge arms in FIG. 2, FIG. 4, FIG. 7, FIG. 8, and FIG. 9 include six semiconductor switch Q1, Q2, Q3, Q4, Q5, and Q6, where Q1 and Q2 are connected to form one primary side bridge arm, Q3 and Q4 are connected to form one primary side bridge arm, and Q5 and Q6 are connected to form one primary side bridge arm. Similarly, three secondary side bridge arms include six semiconductor switch Q7, Q8, Q9, Q10, Q11, and Q12, where Q7 and Q8 are connected to form one secondary side bridge arm, Q9 and Q10 are connected to form one secondary side bridge arm, and Q11 and Q12 are connected to form one secondary side bridge arm.

By using a MOSFET or an IGBT transistor as an example, the two semiconductor switch of each of the primary side bridge arms 12 are serially connected in the same direction in the following connection manner:
if the two semiconductor switch are MOSFETs, a source of one MOSFET is connected to a drain of the other MOSFET; or
if the two semiconductor switch are IGBT transistors, an emitter of one IGBT transistor is connected to a collector of the other IGBT transistor.

The two semiconductor switch of each of the secondary side bridge arms 15 are serially connected in the same direction in the following connection manner:
if the two semiconductor switch are MOSFETs, a source of one MOSFET is connected to a drain of the other MOSFET; or
if the two semiconductor switch are IGBT transistors, an emitter of one IGBT transistor is connected to a collector of the other IGBT transistor.

In FIG. 2, a voltage on a bus capacitor C1 is U1, and a voltage on a filter capacitor C2 is U2. In an actual application, U1 corresponds to a direct current bus voltage of a UPS, U2 corresponds to a battery voltage, and U1>U2.

Field-effect transistors Q1, Q2, Q3, Q4, Q5, and Q6 form three bridge arms at a high voltage side, that is, three primary side bridge arms, where middle points of the three primary side bridge arms are separately connected to three primary side windings of transformers Tr1, Tr2, and Tr3 through a resonant cavity that includes resonant elements Cr1, Lr1, Cr2, Lr2, Cr3, and Lr3, three secondary side windings of the transformers Tr1, Tr2, and Tr3 are separately connected to middle points of three secondary side bridge arms formed by field-effect transistors Q7, Q8, Q9, Q10, Q11, and Q12, and three primary side winding dotted terminals and three secondary side winding dotted terminals of the transformers are separately in Y-shaped connection and floating (that is, not respectively connected to reference grounds of batteries at primary and secondary sides).

According to a relationship between U1 and U2, the transformers Tr1, Tr2, and Tr3 are designed to have a turn ratio. A case in which a resonant bidirectional converter converts U1 to U2 is voltage decrease, of which an actual application in a UPS is that a bidirectional converter charges a battery. In this case, three primary side bridge arms corresponding to the field-effect transistors Q1, Q3, and Q5 are in a main switch state, and three secondary side bridge arms corresponding to the field-effect transistors Q7, Q9, and Q11 are in a synchronous rectification state. A case in which the resonant bidirectional converter converts U2 to U1 is voltage increase, of which an actual application in the UPS is that the mains is input and is powered down, the battery releases power by using the bidirectional converter, a low voltage of the battery is increased to a high voltage of a direct current bus of the UPS, and then the voltage of the direct current bus is converted into an AC or DC voltage through an output end converter of the UPS, to supply power to a critical load; in this case, the three secondary side bridge arms corresponding to the field-effect transistors Q7, Q9, and Q11 are in a main switch state, and the three primary side bridge arms corresponding to the field-effect transistors Q1, Q3, and Q5 are in a synchronous rectification state.

When U1 is decreased to U2, time sequence phases of switches of the three primary side bridge arms corresponding to the field-effect transistors Q1, Q3, and Q5 differ by 120° sequentially, phases of upper and lower transistors of each bridge arm differ by 180°, and a duty cycle is slightly less than 50%. It is defined that a resonant frequency of the resonant cavity is f=1/2π√LC, and a switch frequency varies between the resonant frequency f and 3f. Bridge arms corresponding to Q7, Q9, and Q11 at the secondary side are synchronous rectification bridge arms, time sequences of switches of the bridge arms separately correspond to Q1, Q3, and Q5, of which phases differ by 120° sequentially. Because an interleaved parallel connection technology is used, a frequency of a ripple current flowing through the capacitors C1 and C2 is six times a switch frequency, so that a filter can eliminate the ripple current more easily by filtering, and therefore a used filter (which, herein, is the filter capacitor) can be smaller in size. In addition, after three phases are interleaved by 120°, currents are overlaid with each other and therefore become flat, so that a value of the ripple current is significantly reduced. Therefore, a large-power output demand can be satisfied by using small filter capacitors C1 and C2.

The voltage increase from U2 to U1 may be considered as inverse conversion of conversion from U1 to U2. The secondary side bridge arms corresponding to the field-effect transistors Q7, Q9, and Q11 become switch bridge arms, that is, the secondary side bridge arms are in a main switch state, operation time sequences of the field-effect transistors Q7, Q9, and Q11 of the switch bridge arms differ by 120° sequentially. The primary side bridge arms corresponding to the field-effect transistors Q1, Q3, and Q5 become synchronous rectification bridge arms, that is, the primary side bridge arms are in a synchronous rectification state. Because U1 is a high voltage, currents flowing through the primary side bridge arms are small, so that it may also be considered to use a body diode of a MOSFET or use an IGBT transistor as a rectification bridge arm, to simplify control.

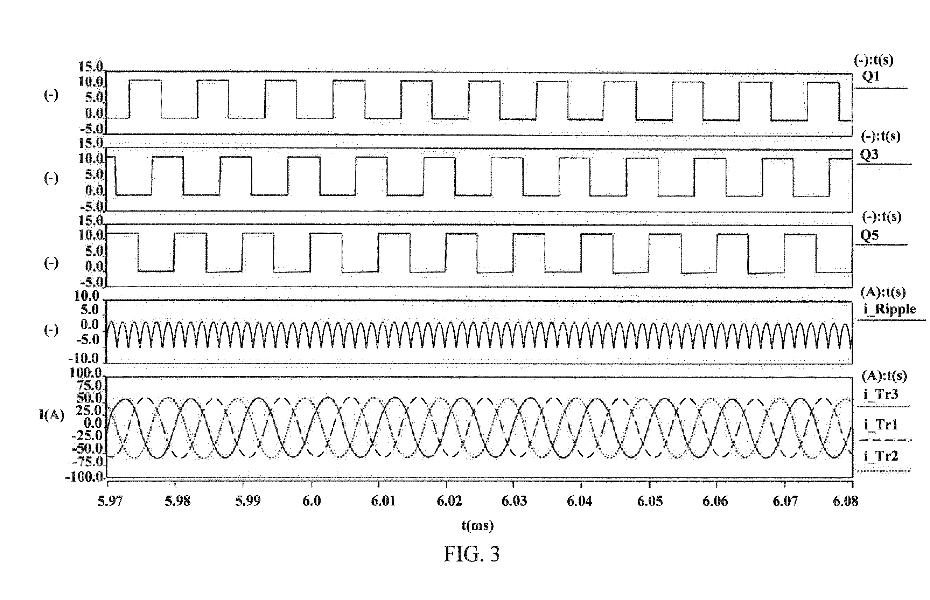

Simulated waveforms of the primary side bridge arms, the filter capacitor, and transformer secondary sides during voltage decrease performed by the resonant bidirectional converter provided in this embodiment are shown in FIG. 3.

The waveforms from top to down are drive waveforms of the field-effect transistors Q1/Q7, Q3/Q9, and Q5/Q11, a ripple current i_Ripple that flows through the capacitor C2 (a waveform of a ripple current that flows through C1 is similar, but an amplitude value is less), and waveforms currents i_Tr3, i_Tr1, and i_Tr2 on secondary side coils of the transformers Tr3, Tr1, and Tr2 (current waveforms at the primary sides are similar, but amplitude values are less). As can be known from the simulated waveform diagram, a current ripple frequency i_Ripple on the filter capacitor at the low voltage side of the three-phase interleaved parallel resonant bidirectional converter is six times a switch frequency; in addition, the ripple current i_Ripple that flows through the filter capacitor is significantly reduced. For example, U2 provides a 56 A current to a load, it is obtained by simulation calculation that the ripple current that flows through C2 is only 2.5 A, that is, the ripple current is reduced to within 5% of the total current. If a single-phase resonant bidirectional converter in the prior art is used and the load is still provided with the 56 A current, a value of a ripple current that flows through the filter capacitor reaches 29 A, and the ripple current is about 50% of the output current. By means of data comparison, the ripple current that flows through the filter capacitor in the embodiment of the present invention is only 1/10 of that in the prior art. Therefore, the filter capacitor in the bidirectional converter shown in the embodiment of the present invention is greatly downsized, and a size and cost of the bidirectional converter are accordingly reduced. Because the three-phase interleaved parallel connection technology is used, current stresses of a power component and the filter capacitor are both reduced accordingly, a reactive power loss is decreased, and efficiency is also improved.

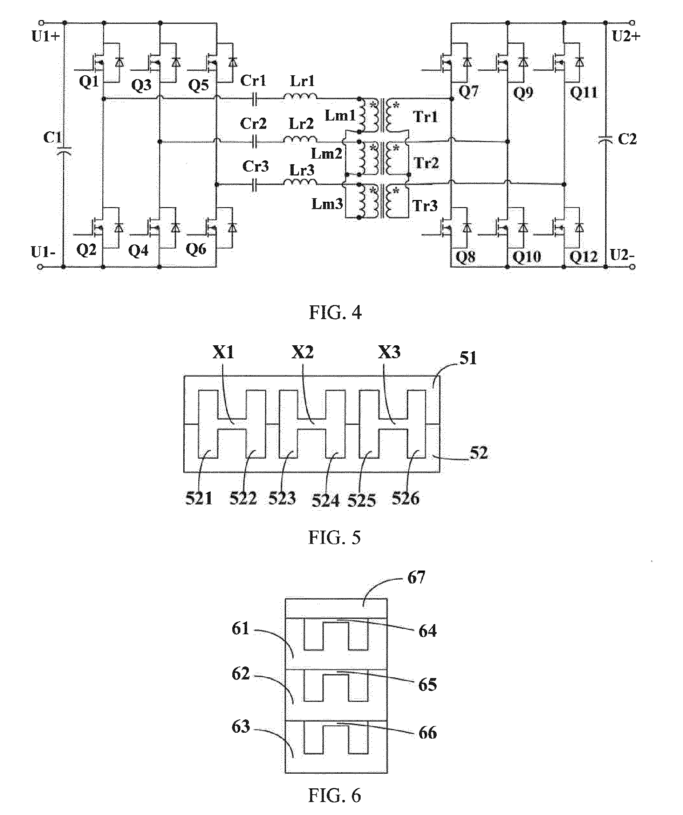

Further, the resonant cavity may further include three excitation inductors, where when the resonant bidirectional converter decreases the voltage at the two ends of the bus capacitor to the voltage at the two ends of the filter capacitor, the three excitation inductors are separately connected to three LC circuits to form three LLC series resonant cavities. FIG. 4 is a circuit diagram of a resonant bidirectional converter according to another embodiment of the present invention. Referring to FIG. 4, a feasible implementation manner of the excitation inductors is as follows:

The converter further includes: three inductor components (Lm1, Lm2, and Lm3), where the three inductor components (Lm1, Lm2, and Lm3) are separately connected in parallel to high-voltage-side coils of the three transformers (Tr1, Tr2, and Tr3), to generate constant-value excitation inductance of the three transformers (Tr1, Tr2, and Tr3) separately.

This embodiment is similar to the embodiment shown in FIG. 2, and a difference lies in that, in this embodiment, when the resonant bidirectional converter performs voltage decrease, the resonant cavity is an LLC series resonant cavity, and when the resonant bidirectional converter performs voltage increase, the resonant cavity is an LC series resonant cavity. When the resonant bidirectional converter decreases U1 to U2, the resonant cavity is an LLC series resonant cavity, which improves the conversion performance of the resonant bidirectional converter.

The excitation inductors Lm, that is, the three inductor components (Lm1, Lm2, and Lm3), are obtained by forming an air gap on a magnetic core of the transformers and are in a proportional relationship with the resonant inductors Lr, for example, Lm/Lr=5~7. FIG. 5 is a schematic diagram of an integrated structure of transformer magnetism of a resonant bidirectional converter according to an embodiment of the present invention. As shown in FIG. 5, three excitation inductors Lm1, Lm2, and Lm3 are respectively obtained by forming air gaps X1, X2, and X3 between magnetic core central pillars of three transformers Tr1, Tr2, and Tr3. Alternatively, independent excitation inductors Lm1, Lm2, and Lm3 may also be connected in parallel to high voltage sides, that is, primary side coils, of the transformers.

Specifically, a feasible implementation manner of the transformers is: Three transformers include a first sub magnetic core and a second sub magnetic core.

The first sub magnetic core has three central pillars, the second sub magnetic core has three central pillars, and top ends of the three central pillars of the first sub magnetic core are disposed opposite to top ends of the three central pillars of the second sub magnetic core in a one-to-one correspondence manner, to form three groups, where each group includes one central pillar of the first sub magnetic core and one central pillar of the second sub magnetic core, of which top ends are disposed opposite to each other.

An air gap exists between one central pillar of the first sub magnetic core and one central pillar of the second sub magnetic core in each group, of which top ends are disposed opposite to each other, to generate constant-value excitation inductance of the three transformers separately.

Specifically, referring to FIG. 5, the three transformers may include two magnetic cores combined face to face, and one of the magnetic cores is twined with primary and secondary side coils of the three transformers, as shown in FIG. 5. The three transformers Tr1, Tr2, and Tr3 are integrated by combining two integral multiple-"E"-shaped magnetic cores 51 and 52 face to face.

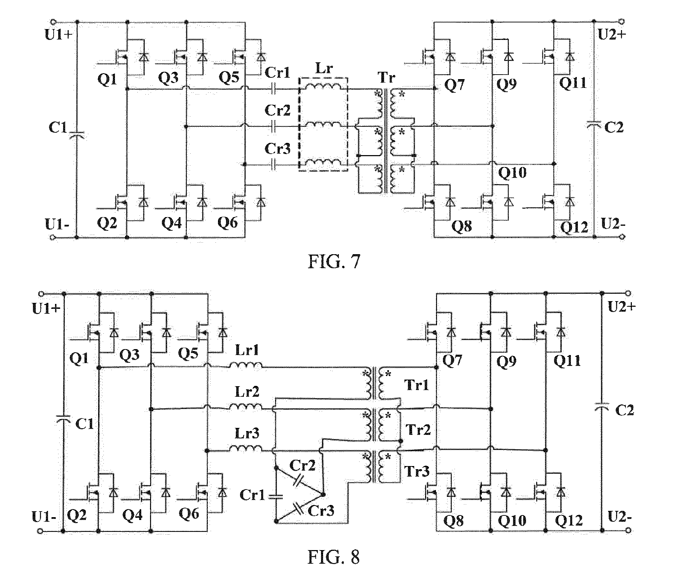

The magnetic core 52 has six grooves: a groove 521, a groove 522, a groove 523, a groove 524, a groove 525, and a groove 526. The groove 521 is a primary side winding window of the transformer Tr1, the groove 522 is a secondary side winding window of the transformer Tr1, the groove 523 is a primary side winding window of the transformer Tr2, the groove 524 is a secondary side winding window of the transformer Tr2, the groove 525 is a primary side winding window of the transformer Tr3, and the groove 526 is a secondary side winding window of the transformer Tr3. In this way, the transformers Tr1, Tr2, and Tr3 are integrated into an entire transformer Tr, and reference may be made to FIG. 7 for details.

It should be noted that, the magnetic cores are not limited to the integral multiple-"E"-shaped magnetic cores, and may also be integral multiple-"PQ"-shaped magnetic cores or the like, and primary and secondary side coils of the transformers Tr1, Tr2, and Tr3 are twined in corresponding windows to form an entire transformer, where connection manners of the coils are shown in FIG. 7. Moreover, air gaps are formed on the three central pillars of the magnetic cores to obtain inductance, that is, obtain the excitation inductors Lm1, Lm2, and Lm3.

Further, the three inductor-capacitor circuits in the foregoing embodiment include a first inductor-capacitor circuit, a second inductor-capacitor circuit, and a third inductor-capacitor circuit, where the first inductor-capacitor circuit includes a first capacitor component and a first inductor component, the second inductor-capacitor circuit includes a second capacitor component and a second inductor component, and the third inductor-capacitor circuit includes a third capacitor component and a third inductor component.

Similar to the foregoing three transformers, the first inductor component, the second inductor component, and the third inductor component may be integrated, and the integrated first inductor component, second inductor component, and third inductor component include a third sub magnetic core, a fourth sub magnetic core, and a fifth sub magnetic core.

The third sub magnetic core has one central pillar, the fourth sub magnetic core has one central pillar, the fifth sub magnetic core has one central pillar, a top end of the central pillar of the third sub magnetic core faces an upper cover, and an air gap exists between the top end of the central pillar of the third sub magnetic core and the upper cover, to generate an inductance value of the first inductor component.

A top end of the central pillar of the fourth sub magnetic core faces a bottom surface of the third sub magnetic core, and an air gap exists between the top end of the central pillar of the fourth sub magnetic core and the bottom surface of the third sub magnetic core, to generate an inductance value of the second inductor component.

A top end of the central pillar of the fifth sub magnetic core faces a bottom surface of the fourth sub magnetic core, and an air gap exists between the top end of the central pillar of the fifth sub magnetic core and the bottom surface of the fourth sub magnetic core, to generate an inductance value of the third inductor component.

FIG. 6 is a schematic diagram of an integrated structure of resonant inductors in a resonant bidirectional converter according to an embodiment of the present invention. Referring to FIG. 6, a feasible implementation manner of integrating the first inductor component, the second inductor component, and the third inductor component is as follows:

The first inductor component, the second inductor component, and the third inductor component, that is, resonant inductors, in the inductor-capacitor circuit may include three magnetic cores combined together, where each of central pillars of the three magnetic cores are provided with an air gap, as shown in FIG. 6. The three inductor components Lr1, Lr2, and Lr3 are integrated and sequentially overlaid by using three "E"-shaped magnetic cores 61, 62, and 63 and one "I"-shaped magnetic core 67, and a central pillar of each "E"-shaped magnetic core is provided with an air gap to obtain inductance with a value. The central pillar of the "E"-shaped magnetic core 61 is provided with an air gap 64 to obtain the first inductor component Lr1, the central pillar of the "E"-shaped magnetic core 62 is provided with an air gap 65 to obtain the second inductor component Lr2, and the central pillar of the "E"-shaped magnetic core 63 is provided with an air gap 66 to obtain the third inductor component Lr3. Coils of the inductor components Lr1, Lr2, and Lr3 are separately twined in corresponding magnetic core windows, and connection manners of the coils are shown in FIG. 7.

Similar to the magnetic cores of the transformers, the magnetic cores used in the resonant inductors are not limited to the "E"-shaped magnetic cores, and may also be "PQ"-shaped magnetic cores or the like.

In the resonant bidirectional converter provided in this embodiment, the three inductor components are integrated onto one physical magnetic core, and the three transformers are integrated onto one magnetic core, which further reduces space occupied by the magnetic elements, improves the power density of the power source, decreases a cost of the magnetic elements, and properly arranges the windings, so that some magnetic circuits are offset by each other in a magnetization direction, thereby reducing an iron loss of the magnetic elements, and further improving the overall conversion efficiency of the power source.

Similarly, the magnetic integration manner may also be used for the three inductor components and the three transformers in the resonant bidirectional converter shown in FIG. 4, that is, the three inductor components are integrated into one resonant inductor Lr, and the three transformers integrated into one transformer Tr.

Further, FIG. 7 is a circuit diagram of a resonant bidirectional converter according to another embodiment of the present invention. A first inductor component Lr, a second inductor component Lr, and a third inductor component Lr are separately connected to three transformers Tr on a one-to-one basis, and a first capacitor component Cr1, a second capacitor component Cr2, and a third capacitor component Cr3 are separately connected to first connection points of three primary side bridge arms on a one-to-one basis.

One end of each of the first inductor component, the second inductor component, and the third inductor component is connected to a primary side of each of the three transformers on a one-to-one basis.

The other end of each of the first inductor component, the second inductor component, and the third inductor component is connected to one end of each of the first capacitor component Cr1, the second capacitor component Cr2, and the third capacitor component Cr3 on a one-to-one basis.

The other end of each of the first capacitor component Cr1, the second capacitor component Cr2, and the third capacitor component Cr3 is connected to the first connection point of each of the three primary side bridge arms on a one-to-one basis.

It should be noted that, this embodiment is similar to the embodiment shown in FIG. 2, and a difference lies in that, three transformers are integrated into one transformer Tr, and three resonant inductors are integrated into one resonant inductor Lr.

Further, the first capacitor Cr1, the second capacitor Cr2, and the third capacitor Cr3 are connected in a head-to-tail manner, any connection point between the first capacitor Cr1 and the second capacitor Cr2, any connection point between the first capacitor Cr1 and the third capacitor Cr3, and any connection point between the second capacitor Cr2 and the third capacitor Cr3 are separately connected to the primary sides of the three transformers (Tr1, Tr2, and Tr3) on a one-to-one basis, the first inductor component Lr1, the second inductor component Lr2, and the third inductor component Lr3 are separately connected to the three transformers (Tr1, Tr2, and Tr3) on a one-to-one basis, and the first inductor component Lr1, the second inductor component Lr2, and the third inductor component Lr3 are separately connected to the first connection points of the three primary side bridge arms on a one-to-one basis.

One end of each of the first inductor component Lr1, the second inductor component Lr2, and the third inductor component Lr3 is connected to the primary side of each of the three transformers (Tr1, Tr2, and Tr3) on a one-to-one basis.

The other end of each of the first capacitor component Lr1, the second capacitor component Lr2, and the third capacitor component Lr3 is connected to the first connection point of each of the three primary side bridge arms on a one-to-one basis.

FIG. 8 is a circuit diagram of a resonant bidirectional converter according to another embodiment of the present invention. This embodiment is similar to the embodiment shown in FIG. 2, and a difference lies in that, in the resonant bidirectional converter shown in FIG. 2, the inductor components Lr1, Lr2, and Lr3 in the inductor-capacitor circuits are separately connected to the primary sides of the transformers Tr1, Tr2, and Tr3, and the capacitors Cr1, Cr2, and Cr3 in the inductor-capacitor circuits are separately connected to the middle points of the primary side bridge arms. In this embodiment, inductors Lr1, Lr2, and Lr3 in LC circuits are connected to middle points of primary side bridge arms, capacitors Cr1, Cr2, and Cr3 in the three LC circuits are in delta connection, and connection points are separately connected to primary sides of three transformers Tr1, Tr2, and Tr3.

Similarly, in the resonant bidirectional converters shown in the embodiments of FIG. 4 and FIG. 7 and the like, resonant capacitors Cr1, Cr2, and Cr3 may be in delta connection.

Further, the resonant bidirectional converter provided in the embodiment of the present invention may further include a controller, where the controller is connected to semiconductor switch in the primary side bridge arms and secondary side bridge arms, and configured to provide a drive signal to the semiconductor switch, to ensure that when the resonant bidirectional converter decreases a voltage at two ends of a bus capacitor to a voltage at two ends of a filter capacitor, the primary side bridge arms are in a main switch state, time sequence phases of switches of the three primary side bridge arms differ by 120° sequentially, and in each of the primary side bridge arms, phases of two semiconductor switch differ by 180° and a duty cycle of each semiconductor switch is 40% to 50%; and when the resonant bidirectional converter increases the voltage at the two ends of the filter capacitor to the voltage at the two ends of the bus capacitor, the primary side bridge arms are in a synchronous rectification state; and ensure that when the resonant bidirectional converter increases the voltage at the two ends of the filter capacitor to the voltage at the two ends of the bus capacitor, the secondary side bridge arms are in a main switch state, time sequence phases of switches of the three secondary side bridge arms differ by 120° sequentially, and in each of the secondary side bridge arms, phases of two semiconductor switch differ by 180° and a duty cycle of each semiconductor switch is 40% to 50%; and when the resonant bidirectional converter decreases the voltage at the two ends of the bus capacitor to the voltage at the two ends of the filter capacitor, the secondary side bridge arms are in a synchronous rectification state.

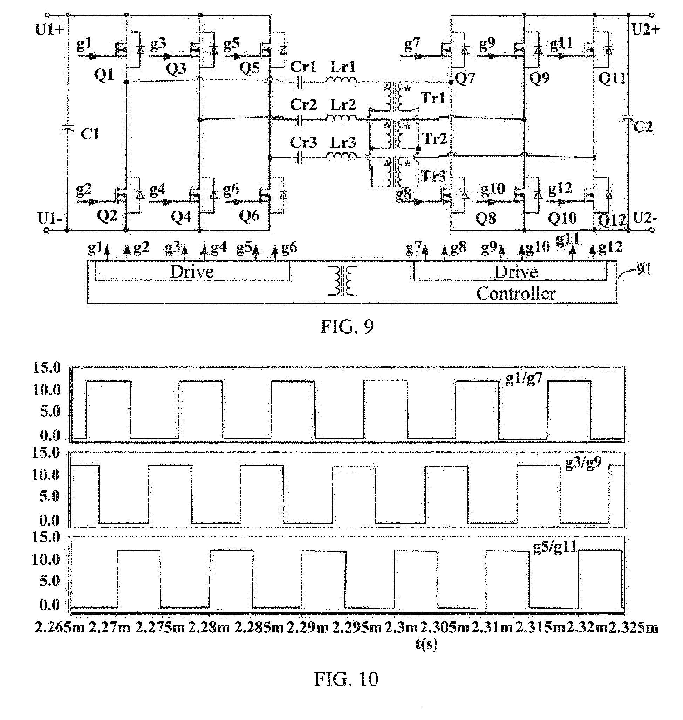

As shown in FIG. 9, based on the converter shown in FIG. 2, a controller 91 is added in the embodiment of the present invention, where the controller 91 may be implemented by using a digital signal processor (Digital Signal Processor, DSP). The controller 91 controls power conversion directions of U1 and U2 according to a demand of the converter (for example, whether a battery needs to be charged or discharged), and sends a drive signal to the semiconductor switch in the primary side bridge arms 12 and the secondary side bridge arms 15 according to a corresponding control policy. The controller 91 outputs six groups of drive signals in total, namely g1 to g6 and g7 to g12, which separately correspond to upper semiconductor switch and lower semiconductor switch of primary and secondary side bridge arms, where drive waveforms of the upper semiconductor switch are shown in FIG. 10, a duty cycle is about 50%, phases of drive signals of semiconductor switch of three bridge arms of each of primary and secondary sides differ by 120°sequentially, and phases of drive signals of upper and lower transistors of each bridge arm differ by 180°, to implement interleaved parallel connection of three-phase resonant converter, and reduce ripple currents at the primary and secondary sides.

Similarly, the resonant bidirectional converters shown in FIG. 1, FIG. 4, FIG. 7, and FIG. 8 may also include the controller 91, so as to control the primary side bridge arms and the secondary side bridge arms, and achieve an objective of reducing the ripple current of the filter capacitor.

The resonant bidirectional converter provided in the foregoing embodiment is applicable to voltage conversion between a battery and a high-voltage direct current bus in an uninterruptible power supply system. By using a three-phase interleaved parallel connection technology, an inherent defect of a large ripple current of a resonant converter is overcome, and a ripple current at a low voltage side is effectively reduced, thereby reducing a size of the filter capacitor, improving power density of a power source, and decreasing a cost of the filter capacitor. In addition, in the resonant bidirectional converter, primary and secondary sides of transformers are in star connection and floating, to form a three-phase non-decoupling system (similar to a three-phase alternating current), which well solves a problem of nonuniform currents between phases because resonant parameters of the phases differ during interleaved parallel connection of a resonant circuit, and makes project implementation of the three-phase interleaved parallel resonant bidirectional converter easier. Further, in the foregoing embodiment, by combining the magnetic integration technology of the resonant inductors and the transformers and proper winding distribution, the size and cost of the magnetic elements are further reduced, and the power density and efficiency of the power source are further improved.

The resonant bidirectional converter provided in the foregoing embodiment may be applied in a scenario of bidirectional energy conversion between high and low voltages, for example, a bidirectional converter of an electric vehicle.

This embodiment further provides an uninterruptible power supply apparatus, including a bus capacitor, a battery, and the resonant bidirectional converter provided in each of the foregoing embodiments, where two ends of each primary side bridge arm of the resonant bidirectional converter are separately connected to two ends of the bus capacitor; two ends of each secondary side bridge arm of the resonant bidirectional converter are separately connected to two ends of the battery; and the resonant bidirectional converter is configured to decrease a voltage at the two ends of the bus capacitor to a voltage at the two ends of the battery, or increase a voltage at the two ends of the battery to a voltage at the two ends of the bus capacitor.

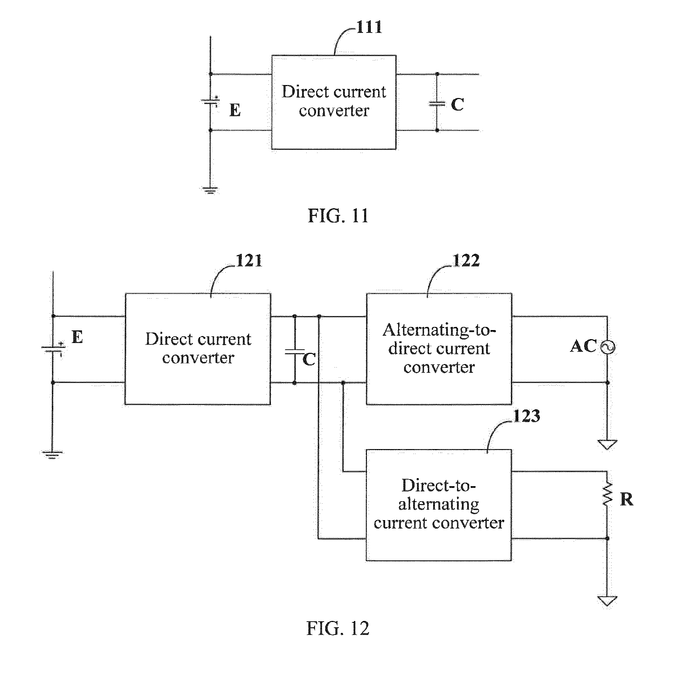

FIG. 11 is a schematic structural diagram of an uninterruptible power supply apparatus according to another embodiment of the present invention. In this embodiment, the UPS includes a battery E, a bus capacitor C, and a direct current converter 111, where the direct current converter 111 may be any resonant bidirectional converter provided in the foregoing converter embodiments, and is separately connected to two ends of the bus capacitor C and the battery E, and configured to increase a voltage, which is generated when the battery E is discharged, to a voltage at the two ends of the bus capacitor C, or decrease a voltage at the two ends of the bus capacitor C to a voltage of the battery E.

FIG. 12 is a schematic structural diagram of an uninterruptible power supply apparatus according to another embodiment of the present invention. In this embodiment, the UPS includes a battery E, a bus capacitor C, a direct current converter 121, an alternating-to-direct current converter 122, and a direct-to-alternating current converter 123.

The alternating-to-direct current converter 122, that is, an input end converter of the UPS apparatus, is configured to convert the mains, that is, an alternating current, to a direct current.

The direct current converter 121 may be any resonant bidirectional converter provided in the foregoing converter embodiments, and is separately connected to two ends of the bus capacitor C and the battery E, and configured to increase a voltage, which is generated when the battery E is discharged, to a voltage at the two ends of the bus capacitor C, or decrease a voltage at the two ends of the bus capacitor C to a voltage of the battery E. The direct-to-alternating current converter 123 is connected to an alternating current critical load R, and configured to convert a direct current on the bus capacitor C to an alternating current, and provide the alternating current to the alternating current critical load R for use.

In the uninterruptible power supply apparatus provided in this embodiment, by using a three-phase interleaved parallel resonant bidirectional DC/DC converter and an interleaved parallel connection technology, an inherent defect of a large ripple current of a resonant converter is overcome, ripple currents at high and low voltage sides are significantly reduced, and current stresses of filters at high and low voltage sides and switch transistors are decreased. Therefore, the uninterruptible power supply apparatus is more applicable to a UPS/Inverter or telecommunications equipment room rectifier and inverter integrated power supply application with a high or medium power level. In addition, because the DC/DC bidirectional converter uses a bridge circuit topology, a converter requirement can be satisfied by selecting switch transistors with a low voltage resistant level, and the bidirectional converter has high conversion efficiency. Therefore, the uninterruptible power supply apparatus also has high conversion efficiency.

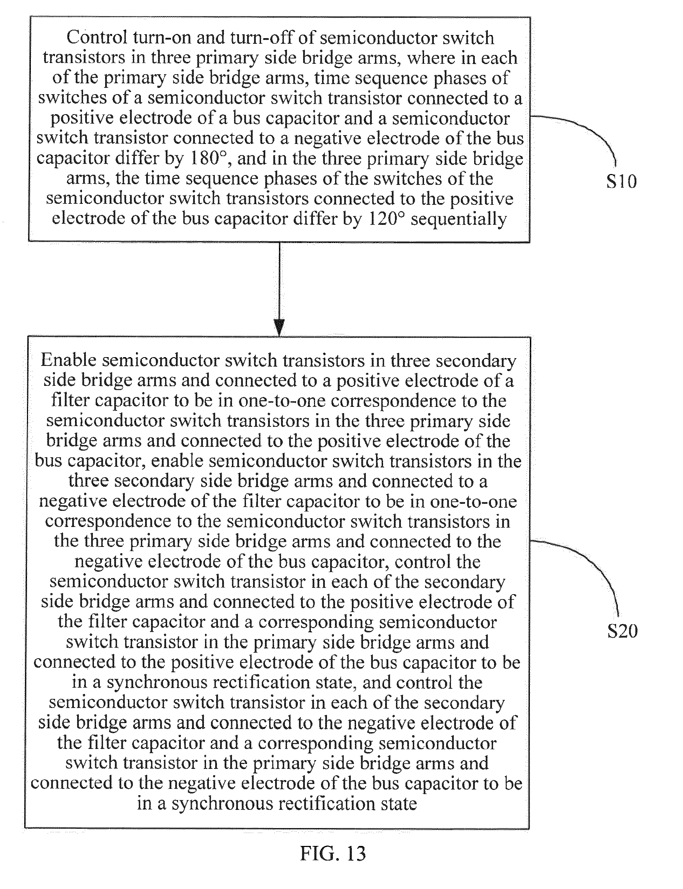

FIG. 13 is a schematic flowchart of a control method according to another embodiment of the present invention. As shown in FIG. 13, the method includes the following steps:

Step S10: Control turn-on and turn-off of semiconductor switch in three primary side bridge arms, where in each of the primary side bridge arms, time sequence phases of switches of a semiconductor switch connected to a positive electrode of a bus capacitor and a semiconductor switch connected to a negative electrode of the bus capacitor differ by 180°, and in the three primary side bridge arms, the time sequence phases of the switches of the semiconductor switch connected to the positive electrode of the bus capacitor differ by 120° sequentially.

Step S20: Enable semiconductor switch in three secondary side bridge arms and connected to a positive electrode of a filter capacitor to be in one-to-one correspondence to the semiconductor switch in the three primary side bridge arms and connected to the positive electrode of the bus capacitor, enable semiconductor switch in the three secondary side bridge arms and connected to a negative electrode of the filter capacitor to be in one-to-one correspondence to the semiconductor switch in the three primary side bridge arms and connected to the negative electrode of the bus capacitor, control the semiconductor switch in each of the secondary side bridge arms and connected to the positive electrode of the filter capacitor and a corresponding semiconductor switch in the primary side bridge arms and connected to the positive electrode of the bus capacitor to be in a synchronous rectification state, and control the semiconductor switch in each of the secondary side bridge arms and connected to the negative electrode of the filter capacitor and a corresponding semiconductor switch in the primary side bridge arms and connected to the negative electrode of the bus capacitor to be in a synchronous rectification state.

In the control method provided in this embodiment, three primary side bridge arms are set to a main switch state and three secondary side bridge arms are set to a synchronous rectification state, so that a voltage at two ends of a bus capacitor is decreased to a voltage at two ends of a filter capacitor, or three primary side bridge arms are set to a synchronous rectification state and three secondary side bridge arms are set to a main switch state, so that a voltage at two ends of a filter capacitor is increased to a voltage at two ends of a bus capacitor. Therefore, an inherent defect of a large ripple current of a resonant converter is overcome, a ripple current of a low-voltage-side capacitor (that is, the filter capacitor) is effectively reduced, and power density of a power source is improved.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as such modifications and replacements do not cause the essence of corresponding technical solutions to depart from the scope of the technical solutions of the embodiments of the present invention.

## Claims

1. A resonant bidirectional converter, comprising: a filter capacitor, three primary side bridge arms, a resonant cavity, three transformers, three secondary side bridge arms, wherein
two ends of each primary side bridge arm are separately connected to two ends of a bus capacitor, each primary side bridge arm comprises two semiconductor switch that are serially connected in a same direction, and any connection point located between the two semiconductor switch that are serially connected in the same direction of each primary side bridge arm is a first connection point;
the resonant cavity comprises three inductor-capacitor circuits, one end of each of the three inductor-capacitor circuits is connected to the first connection point of each of the three primary side bridge arms on a one-to-one basis, and the other end of each of the three inductor-capacitor circuits is connected to a primary side of each of the three transformers on a one-to-one basis;
two ends of each secondary side bridge arm are separately connected to two ends of the filter capacitor, each secondary side bridge arm comprises two semiconductor switch that are serially connected in a same direction, and any connection point located between the two semiconductor switch that are serially connected in the same direction of each secondary side bridge arm is a second connection point; and
secondary sides of the three transformers are connected to the second connection points of the three secondary side bridge arms on a one-to-one basis, primary side winding dotted terminals of the transformers are in star connection and floating, and secondary side winding dotted terminals of the transformers are in star connection and floating.

2. The converter according to claim 1, wherein the semiconductor switch is one of the following:
a metal oxide semiconductor field-effect transistor, a bidirectional controllable metal oxide semiconductor field-effect transistor, an insulated gate bipolar transistor, a gate turn-off thyristor, and a diode.

3. The converter according to claim 2, wherein the two semiconductor switch of each of the primary side bridge arms are serially connected in the same direction in the following connection manner:
if the two semiconductor switch are MOSFETs, a source of one MOSFET is connected to a drain of the other MOSFET; or
if the two semiconductor switch are IGBT, an emitter of one IGBT transistor is connected to a collector of the other IGBT.

4. The converter according to claim 2, wherein the two semiconductor switch of each of the secondary side bridge arms are serially connected in the same direction in the following connection manner:
if the two semiconductor switch are MOSFETs, a source of one MOSFET is connected to a drain of the other MOSFET; or
if the two semiconductor switch are IGBT transistors, an emitter of one IGBT transistor is connected to a collector of the other IGBT transistor.

5. The converter according to any one of claims 1 to 4, wherein the converter further comprises:
three inductor components, wherein the three inductor components are separately connected in parallel to high-voltage-side coils of the three transformers, to generate constant-value excitation inductance of the three transformers separately.

6. The converter according to any one of claims 1 to 4, wherein the three transformers comprise: a first sub magnetic core and a second sub magnetic core, wherein
the first sub magnetic core has three central pillars, the second sub magnetic core has three central pillars, and top ends of the three central pillars of the first sub magnetic core are disposed opposite to top ends of the three central pillars of the second sub magnetic core in a one-to-one correspondence manner, to form three groups, wherein each group comprises one central pillar of the first sub magnetic core and one central pillar of the second sub magnetic core, of which top ends are disposed opposite to each other; and
an air gap exists between one central pillar of the first sub magnetic core and one central pillar of the second sub magnetic core in each group, of which top ends are disposed opposite to each other, to generate constant-value excitation inductance of the three transformers separately.

7. The converter according to any one of claims 1 to 6, wherein the three inductor-capacitor circuits comprise a first inductor-capacitor circuit, a second inductor-capacitor circuit, and a third inductor-capacitor circuit, wherein the first inductor-capacitor circuit comprises a first capacitor component and a first inductor component, the second inductor-capacitor circuit comprises a second capacitor component and a second inductor component, and the third inductor-capacitor circuit comprises a third capacitor component and a third inductor component;
the first inductor component, the second inductor component, and the third inductor component are integrated, and the integrated first inductor component, second inductor component, and third inductor component comprise: a third sub magnetic core, a fourth sub magnetic core, and a fifth sub magnetic core;
the third sub magnetic core has one central pillar, the fourth sub magnetic core has one central pillar, the fifth sub magnetic core has one central pillar, a top end of the central pillar of the third sub magnetic core faces an upper cover, and an air gap exists between the top end of the central pillar of the third sub magnetic core and the upper cover, to generate an inductance value of the first inductor component;
a top end of the central pillar of the fourth sub magnetic core faces a bottom surface of the third sub magnetic core, and an air gap exists between the top end of the central pillar of the fourth sub magnetic core and the bottom surface of the third sub magnetic core, to generate an inductance value of the second inductor component; and
a top end of the central pillar of the fifth sub magnetic core faces a bottom surface of the fourth sub magnetic core, and an air gap exists between the top end of the central pillar of the fifth sub magnetic core and the bottom surface of the fourth sub magnetic core, to generate an inductance value of the third inductor component.

8. The converter according to claim 7, wherein the first inductor component, the second inductor component, and the third inductor component are separately connected to the three transformers on a one-to-one basis, and the first capacitor component, the second capacitor component, and the third capacitor component are separately connected to the first connection points of the three primary side bridge arms on a one-to-one basis, wherein
one end of each of the first inductor component, the second inductor component, and the third inductor component is connected to the primary side of each of the three transformers on a one-to-one basis;
the other end of each of the first inductor component, the second inductor component, and the third inductor component is connected to one end of each of the first capacitor component, the second capacitor component, and the third capacitor component on a one-to-one basis; and
the other end of each of the first capacitor component, the second capacitor component, and the third capacitor component is connected to the first connection point of each of the three primary side bridge arms on a one-to-one basis.

9. The converter according to claim 7, wherein the first capacitor, the second capacitor, and the third capacitor are connected in a head-to-tail manner, any connection point between the first capacitor and the second capacitor, any connection point between the first capacitor and the third capacitor, and any connection point between the second capacitor and the third capacitor are separately connected to the primary sides of the three transformers on a one-to-one basis, the first inductor component, the second inductor component, and the third inductor component are separately connected to the three transformers on a one-to-one basis, and the first inductor component, the second inductor component, and the third inductor component are separately connected to the first connection points of the three primary side bridge arms on a one-to-one basis, wherein
one end of each of the first inductor component, the second inductor component, and the third inductor component is connected to the primary side of each of the three transformers on a one-to-one basis; and
the other end of each of the first inductor component, the second inductor component, and the third inductor component is connected to the first connection point of each of the three primary side bridge arms on a one-to-one basis.

10. An uninterruptible power supply apparatus, comprising a bus capacitor, a battery, and the resonant bidirectional converter according to any one of claims 1 to 9, wherein two ends of each primary side bridge arm of the resonant bidirectional converter are separately connected to two ends of the bus capacitor; two ends of each secondary side bridge arm of the resonant bidirectional converter are separately connected to two ends of the battery; and the resonant bidirectional converter is configured to decrease a voltage at the two ends of the bus capacitor to a voltage at the two ends of the battery, or increase a voltage at the two ends of the battery to a voltage at the two ends of the bus capacitor.

11. The uninterruptible power supply apparatus according to claim 10, wherein the power supply apparatus further comprises: a controller, wherein the controller is configured to control turn-on and turn-off of the semiconductor switch in the three primary side bridge arms, wherein in each of the primary side bridge arms, time sequence phases of switches of a semiconductor switch connected to a positive electrode of the bus capacitor and a semiconductor switch connected to a negative electrode of the bus capacitor differ by 180°, and in the three primary side bridge arms, the time sequence phases of the switches of the semiconductor switch connected to the positive electrode of the bus capacitor differ by 120° sequentially; and
semiconductor switch in the three secondary side bridge arms and connected to a positive electrode of the filter capacitor are in one-to-one correspondence to the semiconductor switch in the three primary side bridge arms and connected to the positive electrode of the bus capacitor, semiconductor switch in the three secondary side bridge arms and connected to a negative electrode of the filter capacitor are in one-to-one correspondence to the semiconductor switch in the three primary side bridge arms and connected to the negative electrode of the bus capacitor, and the controller is further configured to control the semiconductor switch in each of the secondary side bridge arms and connected to the positive electrode of the filter capacitor and a corresponding semiconductor switch in the primary side bridge arms and connected to the positive electrode of the bus capacitor to be in a synchronous rectification state; and control the semiconductor switch in each of the secondary side bridge arms and connected to the negative electrode of the filter capacitor and a corresponding semiconductor switch in the primary side bridge arms and connected to the negative electrode of the bus capacitor to be in a synchronous rectification state.

12. A control method of the resonant converter according to any one of claims 1 to 10, the method comprises:
controlling turn-on and turn-off of the semiconductor switch in three primary side bridge arms, wherein in each of the primary side bridge arms, time sequence phases of switches of a semiconductor switch connected to a positive electrode of the bus capacitor and a semiconductor switch connected to a negative electrode of the bus capacitor differ by 180°, and in the three primary side bridge arms, the time sequence phases of the switches of the semiconductor switch connected to the positive electrode of the bus capacitor differ by 120° sequentially; and
enabling semiconductor switch in the three secondary side bridge arms and connected to a positive electrode of the filter capacitor to be in one-to-one correspondence to the semiconductor switch in the three primary side bridge arms and connected to the positive electrode of the bus capacitor, enabling semiconductor switch in the three secondary side bridge arms and connected to a negative electrode of the filter capacitor to be in one-to-one correspondence to the semiconductor switch in the three primary side bridge arms and connected to the negative electrode of the bus capacitor, controlling the semiconductor switch in each of the secondary side bridge arms and connected to the positive electrode of the filter capacitor and a corresponding semiconductor switch in the primary side bridge arms and connected to the positive electrode of the bus capacitor to be in a synchronous rectification state, and controlling the semiconductor switch in each of the secondary side bridge arms and connected to the negative electrode of the filter capacitor and a corresponding semiconductor switch in the primary side bridge arms and connected to the negative electrode of the bus capacitor to be in a synchronous rectification state.
